# EUROPÄISCHE PATENTSCHRIFT

(11) **EP 3 691 935 B1**
(45) Veröffentlichungstag und Bekanntmachung des Hinweises auf die Patenterteilung: **12.03.2025**
(21) Anmeldenummer: 18762050.5
(22) Anmeldetag: 24.08.2018
(51) Int. Cl.: B60R 25/24, G07C 9/00

(54) **STEUERVORRICHTUNG FÜR EIN BEDIENFREIES FUNKSCHLÜSSELSYSTEM EINES KRAFTFAHRZEUGS, KRAFTFAHRZEUG MIT EINER SOLCHEN STEUERVORRICHTUNG UND VERFAHREN ZUM BETREIBEN EINER SOLCHEN STEUERVORRICHTUNG**
CONTROL DEVICE FOR AN AUTOMATIC WIRELESS KEY SYSTEM OF A MOTOR VEHICLE, MOTOR VEHICLE COMPRISING A CONTROL DEVICE OF THIS KIND, AND METHOD FOR OPERATING A CONTROL DEVICE OF THIS KIND
DISPOSITIF DE COMMANDE POUR UN SYSTÈME DE CLÉS PAR RADIO SANS UTILISATION D'UN VÉHICULE AUTOMOBILE, VÉHICULE AUTOMOBILE COMPRENANT UN DISPOSITIF DE COMMANDE DE CE TYPE ET PROCÉDÉ SERVANT À FAIRE FONCTIONNER UN DISPOSITIF DE COMMANDE DE CE TYPE

(30) Priorität: 05.09.2017 DE 102017215594
(43) Veröffentlichungstag der Anmeldung: 12.08.2020
(73) Patentinhaber: Volkswagen Aktiengesellschaft, 38440 Wolfsburg (DE)
(72) Erfinder: FRICKE, Christoph, 38118 Braunschweig (DE); THIELE, Andreas, 38442 Wolfsburg (DE); NEMETSCHEK, Dominique, 38458 Velpke (DE); TITZE, Andreas, 38110 Braunschweig (DE)
(86) Internationale Anmeldenummer: PCT/EP2018/072895
(87) Internationale Veröffentlichungsnummer: WO 2019/048266

(56) Entgegenhaltungen:
- WO-A1-2017/127053
- DE-A1- 102014 018 057
- DE-A1- 102016 203 047
- DE-A1- 19 939 064
- FR-A1- 3 006 794
- US-A1- 2015 120 151
- US-A1- 2017 106 834
- US-A1- 2018 194 323

## Beschreibung

Die Erfindung betrifft eine Steuervorrichtung für ein bedienfreies Funkschlüsselsystem eines Kraftfahrzeugs, ein Kraftfahrzeug mit einer solchen Steuervorrichtung sowie ein Verfahren zum Betreiben einer Steuervorrichtung eines bedienfreien Funkschlüsselsystems eines Kraftfahrzeugs.

Es sind Steuervorrichtungen bekannt, die bedienfreie Funkschlüsselsysteme für Kraftfahrzeuge steuern und eine Freigabefunktion wie eine Freigabe eines Schließ-/ oder Verriegelungssystems oder einer Motorsperre auslösen oder freigeben können. Ein bedienfreies Funkschlüsselsystem, das auch als schlüsselloses Funkschlüsselsystem oder passives Funkschlüsselsystem bezeichnet werden kann, ist ein solches Funkschlüsselsystem, welches zum Auslösen oder Freigeben der jeweiligen Freigabefunktion nicht bedient werden muss. Bei einem solchen bedienfreien Funkschlüsselsystem muss ein Nutzer eine Funkschlüsseleinheit oder mobile Komponente des Funkschlüsselsystems nur mit sich mitführen, beispielsweise in einer Tasche, er muss diese Funkschlüsseleinheit oder mobile Komponente des Funkschlüsselsystems aber nicht aktiv bedienen, um die jeweilige Freigabefunktion auszulösen. Eine Freigabefunktion kann beispielsweise das Freigeben einer Motorsperre oder einer Fahrzeugverriegelung sein. Bei einem solchen bedienfreien Funkschlüsselsystem wird dann, wenn ein Nutzer etwa eine Fahrzeugtür öffnen will, mittels einer Funkverbindung geprüft, ob die Funkschlüsseleinheit oder mobile Komponente des Funkschlüsselsystems innerhalb eines vorbestimmten Abstandes zum Kraftfahrzeug positioniert ist. Nur wenn dies der Fall ist, wird eine jeweilige Freigabefunktion ausgelöst. Es sind Möglichkeiten bekannt, weitere Sicherheitsmerkmale für das Steuern eines bedienfreien Funkschlüsselsystems bereitzustellen.

Aus der DE 10 2016 100 986 A1 sind ein System und ein Verfahren zur Authentifizierung eines Fahrzeugs, das mit einem passiven schlüssellosen System ausgestattet ist, bekannt. Neben einem anfänglichen Aufforderungssignal zum Ansprechen eines tragbaren Schlüsselanhängers über eine Funkverbindung wird ein sekundäres Aufforderungssignal gesendet. Durch das sekundäre Aufforderungssignal wird nach einem erfolgreichen passiven schlüssellosen Start des Fahrzeugs geprüft, ob eine gültige Antwort vom tragbaren Schlüsselanhänger empfangen wird. Ist dies nicht der Fall, wird eine Abhilfemaßnahme durchgeführt. Der Nachteil an diesem System ist, dass das Fahrzeug schlüssellos starten und losfahren kann, auch wenn ein Schlüssel oder der tragbare Schlüsselanhänger gar nicht im Fahrzeug positioniert sind und Abhilfemaßnahmen in einem solchen Fall erst verzögert stattfinden, wenn das Fahrzeug bereits in Betrieb oder weggefahren ist.

Aus der US 2016/0294562 A1 ist ein Verfahren zur verteilten Authentifizierung eines Nutzers für einen versuchten Zugriff auf einen Service-Provider bekannt. Dabei erfolgt für eine Authentifizierung durch eine erste Authentifizierungsgröße eines Nutzers eine Generierung einer ersten digitalen Teilsignatur für eine erste Authentifizierungsantwort und durch eine zweite Authentifizierungsgröße eines Nutzers eine Generierung einer zweiten digitalen Teilsignatur für eine zweite Authentifizierungsantwort. Die beiden Teilsignaturen werden zu einer digitalen Signatur verbunden, die zur Authentifizierung geprüft wird. Nachteilig dabei ist, dass es aufwendig ist, zwei Teilsignaturen erst zu einer Signatur zu verbinden und dann diese zur Authentifizierung zu prüfen.

Aus der US 2017/0106834 A1 ist ein Kommunikationssystem und Verfahren bekannt, das eine Fahrzeugfunktion basierend auf einer Nähe von zwei drahtlosen Vorrichtungen zu dem Fahrzeug ausführt.

Aus der DE 10 2014 018 057 A1 ist ein Verfahren zum Betrieb eines Kraftfahrzeugs umfassend eine Schließeinrichtung zum automatischen Entriegeln wenigstens einer Fahrzeugtür nach Erfassung eines zugeordneten, sich außerhalb des Fahrzeugs befindlichen Schlüssels über eine der Schließeinrichtung zugeordnete Funkschnittstelle, sowie eine Kommunikationseinrichtung mit einer Funkschnittstelle zur funkgestützten Kommunikation mit einem zugeordneten und über die Funkschnittstelle identifizierbaren, sich innerhalb des Fahrzeugs befindlichen Mobiltelefon bekannt.

Aus der DE 10 2016 203 047 A1 ist ein Verfahren und eine Vorrichtung eines Kraftfahrzeugzugangs- und Start-Systems bekannt, das die von zwei Identifikationsgebern empfangene Identifikation prüft und nur dann das Kraftfahrzeug öffnet oder startet, falls beide Identifikationen korrekt sind.

Aus der DE 199 39 064 A1 ist ein Verfahren zur schlüssellosen Betätigung der Türschließeinrichtung bei Kraftfahrzeugen bekannt, bei welchem über mindestens einen portablen Transponder die Türschließeinrichtung fernbetätigbar ist.

Aufgabe der Erfindung ist es, eine Steuervorrichtung für ein bedienfreies Funkschlüsselsystem bereitzustellen, die eine Freigabefunktion erst dann freigibt, wenn neben einer Authentifizierung einer mobilen Komponente des Funkschlüsselsystems noch ein weiteres Sicherheitsmerkmal als Bedingung erfüllt ist.

Die Aufgabe wird gelöst gemäß den unabhängigen Patentansprüchen. Weitere Vorteile der Erfindung ergeben sich gemäß den abhängigen Patentansprüchen, der folgenden Beschreibung sowie den Figuren.

Die Erfindung stellt ein Kraftfahrzeug mit einem bedienfreien Funkschlüsselsystem bereit, wobei das bedienfreie Funkschlüsselsystem eine fahrzeugseitige Komponente und eine bedienfreie mobile Komponente aufweist, wobei der bedienfreien mobilen Komponente des bedienungsfreien Funkschlüsselsystems eine Beschleunigung und/oder eine Geschwindigkeit mittels jeweiliger Sensoren in der mobilen Komponente zur Verfügung stehen. Des Weiteren weist das Kraftfahrzeug eine Steuervorrichtung für das bedienfreie Funkschlüsselsystem auf, die dazu ausgestaltet ist, eine Freigabefunktion des Kraftfahrzeugs nur dann freizugeben, wenn eine erfindungsgemäße vorbestimmte Bedingung erfüllt ist.

Die Steuervorrichtung ist dazu ausgestaltet, bei einer Authentifizierung, die in einem vorbestimmten Betriebsmodus durch eine erste Funkverbindung zwischen einer bedienfreien mobilen Komponente und einer fahrzeugseitigen Komponente des bedienfreien Funkschlüsselsystems erfolgt ist, eine Freigabefunktion des Funkschlüsselsystems dennoch ausschließlich dann freizugeben, wenn eine vorbestimmte Bedingung erfüllt ist. Mit anderen Worten löst die Steuervorrichtung eine Freigabefunktion des Funkschlüsselsystems, beispielsweise eine Freigabe einer Motorsperre des Kraftfahrzeugs oder eine Freigabe einer Türverriegelung, nur dann aus, wenn einerseits eine erste Funkverbindung zwischen einer mobilen Komponente und einer fahrzeugseitigen Komponente des bedienfreien Funkschlüsselsystems besteht, und andererseits zugleich noch eine weitere vorbestimmte Bedingung erfüllt ist.

Erfindungsgemäß umfasst die vorbestimmte Bedingung, dass eine Kopplung der Steuervorrichtung mit einem vorbestimmten, von der mobilen Komponente des Funkschlüsselsystems verschiedenen mobilen Gerät über eine zweite Funkverbindung hergestellt ist. Die zweite Funkverbindung ist dabei auf einen vorbestimmten Zugangsbereich um das Kraftfahrzeug mit dem bedienfreien Funkschlüsselsystem herum begrenzt. Weiter ist vorgesehen, dass von der Steuervorrichtung über die zweite Funkverbindung empfangene Daten zusätzlich eine jeweilige Information bezüglich einer Beschleunigung und/oder Geschwindigkeit des mobilen Gerätes beinhalten. Die vorbestimmte Bedingung umfasst dabei neben der Kopplung über die zweite Funkverbindung, dass die jeweilige Information verglichen mit einer korrespondierenden Information der mobilen Komponente ein vorbestimmtes Ähnlichkeitskriterium erfüllt. Über die zweite Funkverbindung wird also nicht nur abgefragt, ob das mobile Gerät ein registriertes mobiles Gerät ist, welches zum Freigeben einer Freigabefunktion innerhalb eines vorbestimmten Zugangsbereichs um das Kraftfahrzeug herum positioniert sein muss, sondern über die zweite Funkverbindung werden zusätzliche Daten übertragen. Diese zusätzlichen Daten oder zusätzlichen Informationen beinhalten eine Beschleunigung und/oder Geschwindigkeit des mobilen Gerätes. Eine Beschleunigung des mobilen Gerätes kann durch zumindest einen Beschleunigungssensors bekannt sein. Statt der Beschleunigung kann auch eine Geschwindigkeit des mobilen Gerätes als zusätzliche Information verwendet werden. Eine Geschwindigkeit des mobilen Gerätes kann mittels eines Beschleunigungssensors und einer entsprechenden mathematischen Berechnung ermittelt werden. So kann beispielsweise bekannt sein, ob sich das mobile Gerät gerade in Bewegung befindet, beispielsweise eine Geschwindigkeit von 5 km/h aufweist, oder sich in Stillstand befindet. Die zusätzliche Information wird verglichen mit einer jeweiligen korrespondierenden Information der mobilen Komponente. Damit ist gemeint, dass auch für die mobile Komponente des bedienfreien Funkschlüsselsystems die Beschleunigung und/oder Geschwindigkeit mittels jeweiliger Sensoren in der mobilen Komponente zur Verfügung stehen kann. Die vorbestimmte Bedingung, die erfüllt sein muss, um eine Freigabefunktion freizugeben, ist dann erfüllt, wenn die beiden jeweiligen Informationen ein vorbestimmtes Ähnlichkeitskriterium erfüllen. Das vorbestimmte Ähnlichkeitskriterium bezüglich der Geschwindigkeit kann dabei beispielsweise 0,5 km/h oder 1 km/h sein, um eventuelle Messfehler auszugleichen. Der Vorteil ist, dass durch diese Weiterbildung dem bedienfreien Funkschlüsselsystem ein zusätzliches Sicherheitskriterium hinzugefügt werden kann. Insbesondere sind sowohl eine räumliche Position als auch ein Vergleich von Beschleunigungen und/oder Geschwindigkeiten besonders manipulationssicher, so dass dadurch auch die vorbestimmte Bedingung besonders sicher ist.

Das mobile Gerät ist also ein weiteres funkfähiges Gerät, welches neben der authentifizierten mobilen Komponente des Funkschlüsselsystems innerhalb des vorbestimmten Zugangsbereichs positioniert sein muss, um die vorbestimmte Bedingung zu erfüllen, also um eine Freigabefunktion freigeben zu können. Das mobile Gerät kann beispielsweise eine weitere Funkschlüsseleinheit oder eine weitere, zusätzliche mobile Komponente sein. Das mobile Gerät kann ebenso ein Mobiltelefon oder Smartphone, ein tragbarer Computer oder allgemein ein elektronisches Gerät sein, welches als funkfähiges Gerät dazu ausgestaltet ist, eine Funkverbindung (die besagte zweite Funkverbindung) mit der Steuervorrichtung herzustellen oder zu betreiben. Das mobile Gerät kann eine Kopplung mit der Steuervorrichtung über die zweite Funkverbindung nur dann herstellen, wenn es sich innerhalb des vorbestimmten Zugangsbereichs um das Kraftfahrzeug herum befindet oder dort positioniert ist. Dieser Zugangsbereich kann beispielsweise durch einen Abstand von 1 m, von 5 m oder von 10 m vom Kraftfahrzeug definiert oder begrenzt sein. Der Zugangsbereich kann radial um das Kraftfahrzeug ausgebildet sein, oder durch einen Halbkreis nur auf einer Seite des Kraftfahrzeugs ausgebildet sein. Dadurch ergibt sich der Vorteil, dass ein Zugang nur von einer Seite, beispielsweise einer Fahrertüre, möglich ist und damit eine Sicherheit des Zugangs erhöht wird. Wenn sich das mobile Gerät also innerhalb des Zugangsbereichs befindet, kann es über die zweite Funkverbindung, die von der ersten Funkverbindung verschieden ist, insbesondere frequenzmäßig oder kodierungsmäßig oder bezüglich einer Sendeleistung verschieden ist, eine Kopplung mit der Steuervorrichtung herstellen, sodass die vorbestimmte Bedingung erfüllt ist.

Der Vorteil dabei ist, dass zum Freigeben einer Freigabefunktion des Funkschlüsselsystems oder des Kraftfahrzeugs neben der standardmäßig vorhandenen mobilen Komponente des Funkschlüsselsystems noch ein weiteres mobiles Gerät vorhanden sein muss, wodurch sich eine Sicherheit für das Freigeben der Freigabefunktion erhöht, da dem Funkschlüsselsystem durch das mobile Gerät ein weiteres Sicherheitsmerkmal hinzugefügt ist. Insbesondere ist ein Zugang zum Kraftfahrzeug oder ein Start des Kraftfahrzeugs dann nicht möglich, wenn lediglich eine Authentifizierung der mobilen Komponente des bedienfreien Funkschlüsselsystems erfolgt ist. Selbst wenn also ein unautorisierter Dritter in den Besitz der mobilen Komponente gelangen sollte, kann dieser unautorisierte Dritte dennoch keine Freigabefunktion freigeben, also das Kraftfahrzeug nicht benutzen, da er nicht im Besitz des mobilen Gerätes ist. Insbesondere wenn das mobile Gerät als Smartphone ausgestaltet ist, ergibt sich für einen autorisierten Nutzer des Funkschlüsselsystems kein Nachteil durch einen geringeren Komfort, da ein solches Smartphone normalerweise stets in der Nähe des Nutzers, beispielsweise in einer Tasche des Nutzers positioniert ist und gleichzeitig bereits vorhandene Funkschnittstellen des Smartphones für die zweite Funkverbindung wiederverwendet werden können.

Weitere Vorteile der Erfindung ergeben sich durch Weiterbildungen des erfindungsgemäßen Kraftfahrzeugs.

In einer Weiterbildung des Kraftfahrzeugs ist die zweite Funkverbindung zur Steuervorrichtung eine Bluetooth-Verbindung und/oder eine WLAN-Verbindung. Das mobile Gerät ist also dazu ausgestaltet, eine Bluetooth-Verbindung und/oder eine WLAN-Verbindung aufbauen oder herstellen zu können. Dabei definiert eine jeweilige Sendereichweite der jeweiligen Verbindung den vorbestimmten Zugangsbereich. Wenn ein mobiles Gerät mit einer Bluetooth-Sendeeinheit ausgestattet ist, kann die Sendereichweite dieser Bluetooth-Sendeeinheit üblicherweise 5 m oder 10 m betragen. Gemäß der Weiterbildung ist der vorbestimmte Zugangsbereich in diesem Fall dadurch definiert, dass er bis zu einem Abstand von 5 m oder 10 m um das Kraftfahrzeug herum ausgebildet ist. Durch eine Richtantenne am Kraftfahrzeug kann der Zugangsbereich räumlich beschränkt werden, sodass ein Zugang nicht von allen Seiten des Kraftfahrzeugs her möglich ist. Es ist auch möglich, eine Sendeleistung einer jeweiligen zweiten Funkverbindung vom mobilen Gerät zu reduzieren, um die Sendereichweite entsprechend zu reduzieren und dadurch den vorbestimmten Zugangsbereich zu verkleinern. Der Vorteil ist, dass der Zugangsbereich in Abhängigkeit des verwendeten Funkverfahrens jeweils ohne eine weitere notwendige Maßnahme durch die begrenzte Sendereichweite auf einen Abstand von 1 m oder 5 m oder 10 m um das Kraftfahrzeug herum begrenzt ist. Insbesondere durch eine Reduzierung der jeweiligen Sendeleistung kann dieser Abstand noch weiter verringert werden, sodass sich der vorbestimmte Zugangsbereich weiter verkleinert. Der Vorteil daran ist, dass sich die Sicherheit dadurch erhöht, dass das mobile Gerät zur Freigabe der Freigabefunktion noch näher am Kraftfahrzeug positioniert sein muss, sodass sichergestellt ist, dass nur ein autorisierter Nutzer, der tatsächlich im Besitz des mobilen Gerätes ist, die Freigabefunktion freigeben kann.

In einer Weiterbildung des Kraftfahrzeugs ist die zweite Funkverbindung zur Steuervorrichtung über eine Funkschnittstelle des Kraftfahrzeugs bereitgestellt. Damit ist gemeint, dass das Kraftfahrzeug beispielsweise über eine Bluetooth- und/oder über eine WLAN-Funkschnittstelle verfügt. Diese je bereits vorhandene Funkschnittstelle des Kraftfahrzeugs wird somit wieder verwendet oder doppelt verwendet, sodass sich insgesamt eine Reduzierung oder Einsparung von Funkschnittstellen ergibt. Insbesondere die Steuervorrichtung muss in diesem Fall keine eigene Funkschnittstelle aufweisen. Es reicht, wenn die Steuervorrichtung mit dem Kraftfahrzeug so verbunden ist, dass sie die jeweilige Funkschnittstelle des Kraftfahrzeugs nutzen kann. Der Vorteil daran ist, dass sich durch die Vermeidung von doppelt vorhandenen Funkmodulen oder Funkschnittstellen eine Kostenersparnis und eine Einsparung von benötigtem Bauraum im Kraftfahrzeug ergeben. Eine Weiterbildung des Kraftfahrzeugs sieht vor, dass das mobile Gerät ein jeweils bei der Steuervorrichtung registriertes Smartphone und/oder eine registrierte Smartwatch und/oder ein registriertes funkfähiges Armband und/oder ein registriertes funkfähiges Gerät ist. Das mobile Gerät ist also ein mobiles elektronisches Gerät, welches über eine jeweilige Funkschnittstelle verfügt, beispielsweise eine Bluetooth-Verbindung und/oder eine WLAN-Verbindung herstellen kann. Der Vorteil, dass ein solches Gerät als mobiles Gerät verwendet wird, ist, dass viele Nutzer bereits in Besitz eines solchen mobilen Gerätes sind, und dieses auch für die Kopplung beim bedienfreien Funkschlüsselsystem ihres Kraftfahrzeugs verwenden können, sodass es nicht notwendig ist, ein neues mobiles Gerät anzuschaffen oder ein weiteres mit sich zu führen. Dadurch entstehen Kostenvorteile und ein Nutzer muss weiterhin dieselben mobilen Geräte oder Komponenten mit sich führen um eine Freigabefunktion freigeben zu können, wobei er zusätzlich den Vorteil hat, dass die Sicherheit der Freigabefunktion erhöht ist. Das jeweilige mobile Gerät ist dabei bei der Steuervorrichtung registriert. Dadurch ist sichergestellt, dass ein Benutzer, der das jeweilige Mobilgerät mit sich führt, ein authentifizierter Benutzer ist. Eine Registrierung kann beispielsweise in einer Datenbank der Steuervorrichtung stattfinden oder auch in einer cloudbasierten Servervorrichtung bereitgestellt sein, so dass eine Registrierung besonders einfach ist. Eine Registrierung kann dabei beispielsweise herstellerseitig erfolgen oder dann, wenn durch eine freigegebene Freigabefunktion sichergestellt ist, dass ein Nutzer, welcher ein jeweiliges mobiles Gerät bei der Steuervorrichtung registrieren will, tatsächlich ein autorisierter Nutzer ist.

In einer Weiterbildung des Kraftfahrzeugs ist vorgesehen, dass von der Steuervorrichtung über die zweite Funkverbindung empfangene Daten zusätzlich eine jeweilige Information bezüglich einer räumlichen Position des mobilen Gerätes beinhalten. Die vorbestimmte Bedingung umfasst dabei neben der Kopplung über die zweite Funkverbindung, dass die jeweilige Information verglichen mit einer korrespondierenden Information der mobilen Komponente ein vorbestimmtes Ähnlichkeitskriterium erfüllt. Über die zweite Funkverbindung wird also nicht nur abgefragt, ob das mobile Gerät ein registriertes mobiles Gerät ist, welches zum Freigeben einer Freigabefunktion innerhalb eines vorbestimmten Zugangsbereichs um das Kraftfahrzeug herum positioniert sein muss, sondern über die zweite Funkverbindung werden zusätzliche Daten übertragen. Diese zusätzlichen Daten oder zusätzlichen Informationen beinhalten sowohl eine räumliche Position als auch eine Beschleunigung und/oder eine Geschwindigkeit des mobilen Gerätes. Die Position ist dabei eine räumliche Position oder Geoposition des mobilen Gerätes, welche beispielsweise über ein GPS Signal des mobilen Gerätes bekannt ist. Die räumliche Position kann auch mittels Initialsensoren oder einer funkbasierten Abstandsmessung bekannt sein. Das vorbestimmte Ähnlichkeitskriterium bezüglich der räumlichen Position kann beispielsweise sein, dass die Positionen der mobilen Komponente und des mobilen Gerätes um maximal 1 m oder 2 m oder 5 m voneinander absolut oder relativ zueinander abweichen. Somit ist sichergestellt, dass das mobile Gerät und die mobile Komponente tatsächlich beide beispielsweise in einer unmittelbaren Nähe eines Benutzers sind. Wenn sich dieser Benutzer auf das Kraftfahrzeug zubewegt, weisen beispielsweise sowohl die mobile Komponente als auch das mobile Gerät eine Geschwindigkeit von 5 km/h auf, mit welcher sich der Benutzer auf das Kraftfahrzeug zubewegt. Der Vorteil ist, dass durch diese Weiterbildung dem bedienfreien Funkschlüsselsystem ein zusätzliches Sicherheitskriterium hinzugefügt werden kann. Insbesondere sind sowohl eine per GPS gemessene räumliche Position als auch ein Vergleich von Beschleunigungen und/oder Geschwindigkeiten besonders manipulationssicher, so dass dadurch auch die vorbestimmte Bedingung besonders sicher ist.

Eine Weiterbildung des Kraftfahrzeugs sieht vor, dass die Steuervorrichtung so ausgestaltet ist, im Fall, dass die vorbestimmte Bedingung verletzt ist und ein manuelles oder aktives Freigeben einer Fahrzeugregelung erfolgt ist, einen Motorstart zumindest für eine vorbestimmte Zeitdauer nach dem manuellen oder aktiven Freigeben einer Fahrzeugverriegelung per bedienfreiem Funkschlüsselsystem zuzulassen. Damit ist gemeint, dass beispielsweise dann, wenn ein autorisierter Nutzer im Besitz der mobilen Komponente zum Öffnen des Kraftfahrzeugs die bedienfreie Funktion des bedienfreien Funkschlüsselsystems nicht nutzen kann, etwa weil er das mobile Gerät vergessen hat, und deshalb das Kraftfahrzeug per Funkfernbedienungsfunktion der mobilen Komponente öffnet, das Kraftfahrzeug dennoch, auch ohne dass die das mobile Gerät innerhalb des vorbestimmten Zugangsbereichs positioniert ist, zumindest für eine vorbestimmte Zeitdauer lang gestartet werden kann. Die vorbestimmte Zeitdauer kann so eingestellt werden, dass ein Benutzer sich in das Kraftfahrzeug setzen und dieses starten kann. Beispielsweise kann die vorbestimmte Zeitdauer also in einem Bereich von 15s bis 3min liegen. Der Vorteil daran ist, dass, wenn durch das Bedienen der Funkfernbedienfunktion sichergestellt ist, dass ein autorisierter Benutzer im Besitz der mobilen Komponente das Kraftfahrzeug bedienen will, zum Starten des Kraftfahrzeugs der Komfort des Benutzers durch das bedienfreie Starten ermöglicht werden kann, ohne dabei eine Sicherheit oder Zugangssicherheit des bedienfreien Funkschlüsselsystems zu verringern. Natürlich kann die vorbestimmte Zeitdauer auch größer als die angegebenen Werte sein oder sogar unbegrenzt sein, also unendlich lang andauern.

Eine Weiterbildung des Kraftfahrzeugs sieht vor, dass die Steuervorrichtung ausgestaltet ist, im Fall, dass die vorbestimmte Bedingung nicht erfüllt ist und eine Authentifizierung über die erste Funkverbindung erfolgt ist, eine vorbestimmte Nachricht an das mobile Gerät zu senden. Wenn also eine Authentifizierung der mobilen Komponente stattgefunden hat, das mobile Gerät jedoch nicht innerhalb des bestimmten Zugangsbereichs positionier ist und daher keine Kopplung besteht oder aufgebaut werden kann, kann die Steuervorrichtung eine Nachricht an das mobile Gerät senden. Die Steuervorrichtung kann dazu beispielsweise eine vorhandene WLAN-Schnittstelle verwenden, um eine Nachricht über das Internet an das mobile Gerät zu senden. Die Steuervorrichtung kann auch ein Mobilfunkmodul aufweisen und die vorbestimmte Nachricht als Kurznachricht/SMS an das mobile Gerät senden. Die Steuervorrichtung kann auch so mit dem Kraftfahrzeug verbunden sein, dass eine jeweilige Internetverbindung und/oder Funkverbindung des Kraftfahrzeugs zum Versenden der Nachricht verwendet werden kann. Der Vorteil dabei ist, das insbesondere dann, wenn das mobile Gerät über eine Anzeige verfügt, so wie es bei Smartphones und/oder Smartwatches der Fall ist, ein autorisierter Benutzer, der im Besitz des mobilen Gerätes ist, informiert werden kann, dass ein Zugang zum Kraftfahrzeug angefragt wurde, ohne dass sich das mobile Gerät innerhalb des vorbestimmten Zugangsbereichs befindet. In diesem Fall kann der Benutzer etwa dann, wenn er nicht selbst versucht hat, das Kraftfahrzeug zu öffnen, prüfen, ob ein unautorisierter Dritter versucht, das Kraftfahrzeug zu öffnen.

Zu der Erfindung gehört auch ein Verfahren zum Betreiben einer Steuervorrichtung des erfindungsgemäßen Kraftfahrzeugs. Dabei wird vor einem Aktivieren oder Freigeben einer Freigabefunktion eines Kraftfahrzeugs mit der Steuervorrichtung geprüft, ob eine vorbestimmte Bedingung erfüllt wird, wobei die vorbestimmte Bedingung umfasst, dass eine Kopplung der Steuervorrichtung (10) mit einem vorbestimmten, von der mobilen Komponente (13) des Funkschlüsselsystems verschiedenen mobilen Endgerät (16) über eine zweite Funkverbindung (15) hergestellt wird, wobei die zweite Funkverbindung (15) auf einen vorbestimmten Zugangsbereich (18) um das Kraftfahrzeug (11) herum begrenzt wird, wobei von der Steuervorrichtung (10) über die zweite Funkverbindung (15) empfangene Daten zusätzlich eine Information bezüglich einer Beschleunigung und/oder Geschwindigkeit des mobilen Geräts (16) beinhalten und die vorbestimmte Bedingung weiterhin umfasst, dass die jeweilige Information verglichen mit einer korrespondierenden Information der mobilen Komponente (13) ein vorbestimmtes Ähnlichkeitskriterium erfüllt, und die Freigabefunktion des Funkschlüsselsystems ausschließlich dann freizugeben, wenn die vorbestimmte Bedingung erfüllt wird, wobei der bedienfreien mobilen Komponente des bedienungsfreien Funkschlüsselsystems die Beschleunigung und/oder die Geschwindigkeit mittels jeweiliger Sensoren in der mobilen Komponente zur Verfügung stehen.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

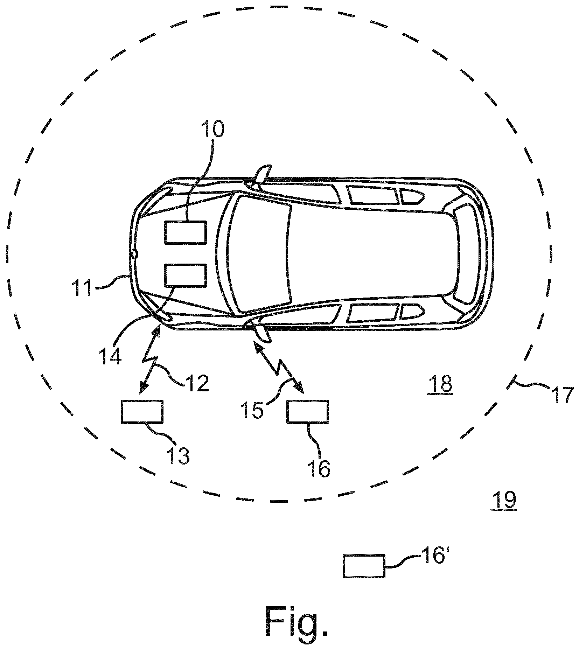

Im Folgenden ist ein Ausführungsbeispiel der Erfindung beschrieben. Hierzu zeigt die einzige Figur (Fig.) eine erfindungsgemäße Steuervorrichtung in einem Kraftfahrzeug mit einem vorbestimmten Zugangsbereich.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die einzige Figur zeigt eine Steuervorrichtung 10 in einem Kraftfahrzeug 11. Über eine erste Funkverbindung 12 kann eine Authentifizierung einer mobilen Komponente 13 mit einer fahrzeugseitigen Komponente 14 eines bedienfreien Funkschlüsselsystems des Kraftfahrzeugs 11 erfolgen. Über eine zweite Funkverbindung 15 kann eine Kopplung der Steuervorrichtung 10 mit einem mobilen Gerät 16 hergestellt werden. Das mobile Gerät 16 befindet sich dabei in einem vorbestimmten Zugangsbereich 18. Der vorbestimmte Zugangsbereich 18 wird um das Kraftfahrzeug 11 herum von einer Grenze 17 begrenzt, welche radialsymmetrisch sein kann oder auch nur auf einer Seite des Kraftfahrzeugs 11 ausgebildet sein kann. Ein mobiles Gerät 16' kann sich in einem Außenbereich 19 befinden, der nicht in dem vorbestimmten Zugangsbereich 18 liegt, also komplementär zu diesem ist.

In einem ersten Ausführungsbeispiel ist das mobile Gerät ein Smartphone oder eine Smartwatch. Das mobile Gerät verfügt also über eine WLAN-Schnittstelle und eine Bluetooth-Schnittstelle. Ein nicht dargestellter Benutzer des Kraftfahrzeugs 11 führt, um eine Freigabe einer Verriegelungsfunktion des Kraftfahrzeugs 11 vornehmen und dieses öffnen zu können, die mobile Komponente 13 mit sich. Diese wird über die erste Funkverbindung 12 von der fahrzeugseitigen Komponente 14 authentifiziert. Zusätzlich führt der Benutzer das mobile Gerät 16 mit sich. In dem nicht-beanspruchten Ausführungsbeispiel befindet sich der Benutzer mit dem mobilen Gerät 16 innerhalb des vorbestimmten Zugangsbereichs 18. In diesem Fall ist die vorbestimmte Bedingung dadurch erfüllt, dass über die zweite Funkverbindung 15 die Steuervorrichtung 10 und das mobile Gerät 16 miteinander gekoppelt sind. Somit kann der Benutzer eine Tür des Kraftfahrzeugs 11 per bedienfreier Zugangsfunktion öffnen, ohne zur Entriegelung einer Türverriegelungsanlage des Kraftfahrzeugs 11 eine Betätigung an der mobilen Komponente 13 oder dem mobilen Gerät 16 vornehmen zu müssen.

In einem weiteren nicht-beanspruchten Ausführungsbeispiel besteht eine erste Funkverbindung 12 zwischen der mobilen Komponente 13 und der fahrzeugseitigen Komponente 14. Das mobile Gerät 16' befindet sich jedoch im Außenbereich 19, so dass die vorbestimmte Bedingung nicht erfüllt ist. In diesem Fall gibt die Steuervorrichtung 10 die Entriegelung einer Fahrzeugtüre per bedienfreier Zugangsfunktion nicht frei. Ein Benutzer muss in diesem Fall entweder für das Verwenden der bedienfreien Zugangsfunktion das mobile Gerät 16' innerhalb des vorbestimmten Zugangsbereich 18 positionieren oder eine Funkfernbedienungsfunktion der mobilen Komponente 13 verwenden, um das Kraftfahrzeug 11 öffnen zu können. Wenn der Benutzer eine Fahrzeugtüre per Funkfernbedienungsfunktion entriegelt oder öffnet, kann er für eine gewisse Zeit danach, beispielsweise 30 Sekunden oder 2 Minuten, einen Motorstart per bedienfreier Zugangsfunktion betätigen, auch wenn das mobile Gerät 16' weiterhin im Außenbereich 19 positioniert ist.

In einem weiteren nicht-beanspruchten Ausführungsbeispiel befindet sich das mobile Gerät 16' im Außenbereich 19. Wenn in diesem Fall die mobile Komponente 13 über die erste Funkverbindung 12 von der fahrzeugseitigen Komponente 14 authentifiziert wird, sendet die Steuervorrichtung 10 eine Nachricht an das Mobilgerät 16'. Eine solche Nachricht kann etwa sein: "mobiles Gerät außerhalb des vorbestimmten Zugangsbereichs". Die Nachricht kann beispielsweise direkt von der Steuervorrichtung 10 über eine Mobilfunkschnittstelle der Steuervorrichtung 10 an das mobile Gerät 16' gesendet werden oder über eine Mobilfunkschnittstelle des Kraftfahrzeugs 11, welche mit der Steuervorrichtung 10 verbunden ist an das mobile Gerät 16' gesendet werden. Ein Benutzer im Besitz des mobilen Gerätes 16' wird somit beispielsweise per Textnachricht darüber informiert, dass eine erste Funkverbindung zwischen der mobilen Komponente 13 und der fahrzeugseitigen Komponente 14 besteht, ohne dass sich das mobile Gerät 16' innerhalb des vorbestimmten Zugangsbereichs befindet.

Die Erfindung zeigt also, wie eine bedienfreie Zugangsfunktion zu einem Kraftfahrzeug nur dann erlaubt wird, wenn ein zum Kraftfahrzeug gehöriger Identifikations-Geber, also eine mobile Komponente, und gleichzeitig ein am Kraftfahrzeug angemeldetes oder registriertes mobiles Gerät, zum Beispiel ein Smartphone, von der Steuervorrichtung gefunden oder über eine jeweilige Funkverbindung identifiziert wurde. Wenn das mobile Gerät, zum Beispiel das Smartphone, nicht verfügbar ist, kann ein Zugang zum Kraftfahrzeug nur über eine Funkfernbedienungsfunktion erfolgen. Bei einem erfolgreichen Zugang über die Funkfernbedienungsfunktion kann ein Motorstart wiederum per bedienfreier Zugangsfunktion erfolgen. Erfindungsgemäß wird eine Beschleunigung und/oder eine Geschwindigkeit des mobilen Geräts mit der von der mobilen Komponente verglichen, wobei eine Freigabefunktion nur dann freigegeben wird, wenn der Vergleich ein vorbestimmtes Ähnlichkeitskriterium erfüllt. Bei dem Vergleich der Beschleunigung müssen die jeweiligen Bewegungsprofile gemäß dem Ähnlichkeitskriterium übereinstimmen. Zusätzlich kann eine Position der mobilen Komponente mit dem mobilen Gerät verglichen werden.

Wenn keine Funkverbindung zwischen dem mobilen Gerät und dem Kraftfahrzeug hergestellt werden kann, kann ein Popup oder eine Nachricht auf dem mobilen Gerät, dass ein Smartphone sein kann, generiert werden, welcher ein Öffnen des Kraftfahrzeugs über eine bewusste Bedienhandlung ermöglicht oder absichert. Als mobiles Gerät sind Bluetooth-fähige elektronische Geräte vorgesehen, beispielsweise ein Smartphone, eine Smartwatch, ein Fitness-Armband mit Bluetooth-Funktion oder andere Geräte mit Bluetooth-Funktion.

Insgesamt zeigt das Beispiel, wie durch die Erfindung ein bedienfreies Funkschlüsselsystem eines Kraftfahrzeugs über eine zusätzliche, zweite Funkverbindung, beispielsweise eine Bluetooth-Kopplung und/oder eine WLAN-Kopplung, zwischen einem mobilen Gerät wie einem Smartphone und dem Kraftfahrzeug sicherer gemacht werden kann.

### Bezugszeichenliste

- 10: Steuervorrichtung
- 11: Kraftfahrzeug
- 12: erste Funkverbindung
- 13: mobile Komponente
- 14: fahrzeugseitige Komponente
- 15: zweite Funkverbindung
- 16: mobiles Gerät
- 17: Grenze
- 18: vorbestimmter Zugangsbereich
- 19: Außenbereich

## Patentansprüche

1. Kraftfahrzeug (11) mit einem bedienfreien Funkschlüsselsystem mit einer fahrzeugseitigen Komponente (14) und einer bedienfreien mobilen Komponente (13), wobei das Kraftfahrzeug (11) eine Steuervorrichtung (10) aufweist, wobei der bedienfreien mobilen Komponente (13) des bedienungsfreien Funkschlüsselsystems eine Beschleunigung und/oder eine Geschwindigkeit mittels jeweiliger Sensoren in der mobilen Komponente (13) zur Verfügung stehen, wobei die Steuervorrichtung (10) für das bedienfreie Funkschlüsselsystem dazu ausgestaltet ist, bei einer Authentifizierung, die in einem vorbestimmten Betriebsmodus durch eine erste Funkverbindung (12) zwischen der bedienfreien mobilen Komponente (13) und der fahrzeugseitigen Komponente (14) des bedienfreien Funkschlüsselsystems erfolgt ist, eine Freigabefunktion des Funkschlüsselsystems dennoch ausschließlich dann freizugeben, wenn eine vorbestimmte Bedingung erfüllt ist,
wobei die vorbestimmte Bedingung umfasst, dass eine Kopplung der Steuervorrichtung (10) mit einem vorbestimmten, von der mobilen Komponente (13) des Funkschlüsselsystems verschiedenen mobilen Gerät (16) über eine zweite Funkverbindung (15) hergestellt ist, wobei die zweite Funkverbindung (15) auf einen vorbestimmten Zugangsbereich (18) um das Kraftfahrzeug (11) herum begrenzt ist,
**dadurch gekennzeichnet, dass**
von der Steuervorrichtung (10) über die zweite Funkverbindung (15) empfangene Daten zusätzlich eine Information bezüglich einer Beschleunigung und/oder Geschwindigkeit des mobilen Geräts (16) beinhalten und die vorbestimmte Bedingung weiterhin umfasst, dass die jeweilige Information verglichen mit einer korrespondierenden Information der mobilen Komponente (13) ein vorbestimmtes Ähnlichkeitskriterium erfüllt.

2. Kraftfahrzeug (11) nach Anspruch 1, wobei die zweite Funkverbindung (15) zur Steuervorrichtung (10) eine Bluetooth-Verbindung und/oder eine WLAN Verbindung ist, wobei eine jeweilige Sendereichweite der jeweiligen Funkverbindung den vorbestimmten Zugangsbereich (18) definiert.

3. Kraftfahrzeug (11) nach einem der vorhergehenden Ansprüche, wobei die zweite Funkverbindung (15) zur Steuervorrichtung (10) über eine Funkschnittstelle des Kraftfahrzeugs (11) bereitgestellt ist.

4. Kraftfahrzeug (11) nach einem der vorhergehenden Ansprüche, wobei das mobile Gerät (16) ein jeweils bei der Steuervorrichtung (10) registriertes Smartphone (16) und/oder eine registrierte Smartwatch (16) und/oder ein registriertes funkfähiges Armband (16) und/oder ein registriertes funkfähiges Gerät ist.

5. Kraftfahrzeug (11) nach einem der vorhergehenden Ansprüche, wobei von der Steuervorrichtung (10) über die zweite Funkverbindung (15) empfangene Daten zusätzlich eine Information bezüglich einer räumlichen Position des mobilen Gerätes (16) beinhalten und die vorbestimmte Bedingung weiterhin umfasst, dass die jeweilige Information verglichen mit einer korrespondieren Information der mobilen Komponente (13) ein vorbestimmtes Ähnlichkeitskriterium erfüllt.

6. Kraftfahrzeug (11) nach einem der vorhergehenden Ansprüche, wobei die Steuervorrichtung (10) ausgestaltet ist, im Fall, dass die vorbestimmte Bedingung verletzt ist und ein manuelles oder aktives Freigeben einer Fahrzeugverriegelung erfolgt ist, einen Motorstart zumindest für eine vorbestimmte Zeitdauer nach dem manuellen oder aktiven Freigeben einer Fahrzeugverriegelung per bedienfreier Zugangsfunktion zuzulassen.

7. Kraftfahrzeug (11) nach einem der vorhergehenden Ansprüche, wobei die Steuervorrichtung (10) ausgestaltet ist, im Fall, dass die vorbestimmte Bedingung nicht erfüllt ist und eine Authentifizierung über die erste Funkverbindung (12) erfolgt ist, eine vorbestimmte Nachricht an das mobile Gerät (16) zu senden.

8. Verfahren zum Betreiben einer Steuervorrichtung (10) eines Kraftfahrzeugs(11) gemäß einem der Ansprüche 1 bis 7, wobei vor einem Aktivieren einer Freigabefunktion eines Kraftfahrzeugs (11) mit der Steuervorrichtung (10) geprüft wird, ob eine vorbestimmte Bedingung erfüllt wird, wobei die vorbestimmte Bedingung umfasst, dass eine Kopplung der Steuervorrichtung (10) mit einem vorbestimmten, von der mobilen Komponente (13) des Funkschlüsselsystems verschiedenen mobilen Endgerät (16) über eine zweite Funkverbindung (15) hergestellt wird, wobei die zweite Funkverbindung (15) auf einen vorbestimmten Zugangsbereich (18) um das Kraftfahrzeug (11) herum begrenzt wird, wobei von der Steuervorrichtung (10) über die zweite Funkverbindung (15) empfangene Daten zusätzlich eine Information bezüglich einer Beschleunigung und/oder Geschwindigkeit des mobilen Geräts (16) beinhalten und die vorbestimmte Bedingung weiterhin umfasst, dass die jeweilige Information verglichen mit einer korrespondierenden Information der mobilen Komponente (13) ein vorbestimmtes Ähnlichkeitskriterium erfüllt, und die Freigabefunktion des Funkschlüsselsystems ausschließlich dann freizugeben, wenn die vorbestimmte Bedingung erfüllt wird,
wobei der bedienfreien mobilen Komponente (13) des bedienungsfreien Funkschlüsselsystems die Beschleunigung und/oder die Geschwindigkeit mittels jeweiliger Sensoren in der mobilen Komponente (13) zur Verfügung stehen.

## Claims

1. Motor vehicle (11) comprising an automatic wireless key system having a vehicle-side component (14) and an automatic mobile component (13), the motor vehicle (11) having a control device (10), an acceleration and/or a speed being available to the automatic mobile component (13) of the automatic wireless key system by means of relevant sensors in the mobile component (13), the control device (10) for the automatic wireless key system being designed to release, in the event of an authentication which is carried out in a predetermined operating mode by means of a first wireless connection (12) between the automatic mobile component (13) and the vehicle-side component (14) of the automatic wireless key system, a release function of the wireless key system only if a predetermined condition is met,
the predetermined condition involving the control device (10) being coupled to a predetermined mobile device (16), different from the mobile component (13) of the wireless key system, via a second wireless connection (15), the second wireless connection (15) being limited to a predetermined access region (18) around the motor vehicle (11),
**characterized in that**
data received by the control device (10) via the second wireless connection (15) additionally contain information relating to an acceleration and/or speed of the mobile device (16), and the predetermined condition further involves the relevant information meeting a predetermined similarity criterion compared with corresponding information relating to the mobile component (13).

2. Motor vehicle (11) according to claim 1, wherein the second wireless connection (15) to the control device (10) is a Bluetooth connection and/or a WLAN connection, wherein a relevant transmission range of the relevant wireless connection defines the predetermined access region (18).

3. Motor vehicle (11) according to any of the preceding claims, wherein the second wireless connection (15) to the control device (10) is provided via a wireless interface of the motor vehicle (11).

4. Motor vehicle (11) according to any of the preceding claims, wherein the mobile device (16) is a smartphone (16) registered with the control device (10) and/or a registered smartwatch (16) and/or a registered wireless-enabled bracelet (16) and/or a registered wireless-enabled device.

5. Motor vehicle (11) according to any of the preceding claims, wherein data received by the control device (10) via the second wireless connection (15) additionally contain information regarding a spatial position of the mobile device (16) and the predetermined condition further involves the relevant information meeting a predetermined similarity criterion compared with corresponding information relating to the mobile component (13).

6. Motor vehicle (11) according to any of the preceding claims, wherein the control device (10) is designed to allow, in the event that the predetermined condition is breached and a manual or active release of a vehicle lock is carried out, an engine start at least for a predetermined period of time after the manual or active release of a vehicle lock by means of an automatic access function.

7. Motor vehicle (11) according to any of the preceding claims, wherein the control device (10) is designed to send, in the event that the predetermined condition is not met and an authentication is carried out via the first wireless connection (12), a predetermined message to the mobile device (16).

8. Method for operating a control device (10) of a motor vehicle (11) according to any of claims 1 to 7, wherein, before activating a release function of a motor vehicle (11), by means of the control device (10), it is checked whether a predetermined condition is met, wherein the predetermined condition involves the control device (10) being coupled to a predetermined mobile terminal (16), different from the mobile component (13) of the wireless key system, via a second wireless connection (15), wherein the second wireless connection (15) is limited to a predetermined access region (18) around the motor vehicle (11), wherein data received by the control device (10) via the second wireless connection (15) additionally contain information regarding an acceleration and/or speed of the mobile device (16) and the predetermined condition further involves the relevant information meeting a predetermined similarity criterion compared with corresponding information relating to the mobile component (13), and release function of the wireless key system should be released only when the predetermined condition is met,
wherein the acceleration and/or the speed are available to the automatic mobile component (13) of the automatic wireless key system by means of respective sensors in the mobile component (13).

## Revendications

1. Véhicule automobile (11) comportant un système de clé par radio sans manipulation comportant un composant côté véhicule (14) et un composant mobile sans manipulation (13), dans lequel le véhicule automobile (11) présente un dispositif de commande (10), dans lequel une accélération et/ou une vitesse sont mises à la disposition du composant mobile sans manipulation (13) du système de clé par radio sans manipulation à l'aide de capteurs respectifs dans le composant mobile (13), dans lequel le dispositif de commande (10) pour le système de clé par radio sans manipulation est conçu pour, lors d'une authentification qui a été effectuée dans un mode de fonctionnement prédéterminé par une première liaison radio (12) entre le composant mobile sans manipulation (13) et le composant côté véhicule (14) du système de clé par radio sans manipulation, libérer néanmoins une fonction de libération du système de clé par radio exclusivement lorsqu'une condition prédéterminée est satisfaite,
dans lequel la condition prédéterminée comprend qu'un couplage du dispositif de commande (10) avec un appareil mobile prédéterminé (16) différent du composant mobile (13) du système de clé par radio est établi par l'intermédiaire d'une seconde liaison radio (15), dans lequel la seconde liaison radio (15) est limitée à une zone d'accès prédéterminée (18) autour du véhicule automobile (11),
**caractérisé en ce que**
les données reçues par le dispositif de commande (10) par l'intermédiaire de la seconde liaison radio (15) contiennent en outre une information concernant une accélération et/ou une vitesse de l'appareil mobile (16) et la condition prédéterminée comprend en outre que l'information respective satisfait à un critère de similitude prédéterminé par comparaison avec une information correspondante du composant mobile (13).

2. Véhicule automobile (11) selon la revendication 1, dans lequel la seconde liaison radio (15) vers le dispositif de commande (10) est une liaison Bluetooth et/ou une liaison WLAN, dans lequel une portée d'émission respective de la liaison radio respective définit la zone d'accès prédéterminée (18).

3. Véhicule automobile (11) selon l'une des revendications précédentes, dans lequel la seconde liaison radio (15) vers le dispositif de commande (10) est fournie par l'intermédiaire d'une interface radio du véhicule automobile (11).

4. Véhicule automobile (11) selon l'une des revendications précédentes, dans lequel l'appareil mobile (16) est un téléphone intelligent (16) enregistré respectivement auprès du dispositif de commande (10) et/ou une montre intelligente (16) enregistrée et/ou un bracelet (16) compatible radio enregistré et/ou un appareil compatible radio enregistré.

5. Véhicule automobile (11) selon l'une des revendications précédentes, dans lequel des données reçues par le dispositif de commande (10) par l'intermédiaire de la seconde liaison radio (15) contiennent en outre une information concernant une position spatiale de l'appareil mobile (16) et la condition prédéterminée comprend en outre que l'information respective satisfait à un critère de similitude prédéterminé par comparaison avec une information correspondante du composant mobile (13).

6. Véhicule automobile (11) selon l'une des revendications précédentes, dans lequel le dispositif de commande (10) est conçu, dans le cas où la condition prédéterminée est enfreinte et une libération manuelle ou active d'un verrouillage de véhicule a été effectuée, pour autoriser un démarrage du moteur au moins pendant une durée prédéterminée après la libération manuelle ou active d'un verrouillage de véhicule par fonction d'accès sans manipulation.

7. Véhicule automobile (11) selon l'une des revendications précédentes, dans lequel le dispositif de commande (10) est conçu pour envoyer un message prédéterminé à l'appareil mobile (16) dans le cas où la condition prédéterminée n'est pas satisfaite et une authentification a été effectuée par l'intermédiaire de la première liaison radio (12).

8. Procédé destiné à faire fonctionner un dispositif de commande (10) d'un véhicule automobile (11) selon l'une des revendications 1 à 7, dans lequel, avant une activation d'une fonction de libération d'un véhicule automobile (11) avec le dispositif de commande (10), on vérifie si une condition prédéterminée est satisfaite, dans lequel la condition prédéterminée comprend qu'un couplage du dispositif de commande (10) avec un terminal mobile (16) prédéterminé, différent du composant mobile (13) du système de clé par radio, est établi par l'intermédiaire d'une seconde liaison radio (15), dans lequel la seconde liaison radio (15) est limitée à une zone d'accès prédéterminée (18) autour du véhicule automobile (11), dans lequel des données reçues par le dispositif de commande (10) par l'intermédiaire de la seconde liaison radio (15) contiennent en outre une information concernant une accélération et/ou une vitesse de l'appareil mobile (16) et la condition prédéterminée comprend en outre que l'information respective satisfait à un critère de similitude prédéterminé par comparaison avec une information correspondante du composant mobile (13), et pour libérer la fonction de libération du système de clé par radio exclusivement lorsque la condition prédéterminée est satisfaite,
dans lequel l'accélération et/ou la vitesse sont mises à disposition du composant mobile sans manipulation (13) du système de clé par radio sans manipulation à l'aide de capteurs respectifs dans le composant mobile (13).
